# EUROPÄISCHE PATENTSCHRIFT

(11) **EP 2 707 251 B1**
(45) Veröffentlichungstag und Bekanntmachung des Hinweises auf die Patenterteilung: **21.01.2015**
(21) Anmeldenummer: 12715849.1
(22) Anmeldetag: 17.04.2012
(51) Int. Cl.: B60N 2/36

(54) **VERRIEGELUNGSSYSTEM**
LOCKING SYSTEM
SYSTÈME DE VERROUILLAGE

(30) Priorität: 12.05.2011 DE 102011101876
(43) Veröffentlichungstag der Anmeldung: 19.03.2014
(73) Patentinhaber: Johnson Controls Components GmbH & Co. KG, 67657 Kaiserslautern (DE)
(72) Erfinder: TEUFEL, Ingo, 67806 Rockenhausen (DE); SCHUMANN, Kai, 66509 Rieschweiler-Mühlbach (DE)
(74) Vertreter: Wilhelm, Wolfgang
(86) Internationale Anmeldenummer: PCT/EP2012/001646
(87) Internationale Veröffentlichungsnummer: WO 2012/152363

(56) Entgegenhaltungen:
- DE-A1-102008 033 304
- US-A1- 2009 008 981

## Beschreibung

Die Erfindung betrifft ein Verriegelungssystem für einen Fahrzeugsitz, insbesondere für einen Kraftfahrzeugsitz, mit den Merkmalen des Oberbegriffs des Anspruchs 1. Die Erfindung betrifft auch einen Fahrzeugsitz mit den Merkmalen des Anspruchs 11.

### Stand der Technik

Aus der WO 2010 / 003 587 A1 ist ein gattungsgemäßes Verriegelungssystem zur Verriegelung einer Rückenlehne eines Fahrzeugsitzes an einer Fahrzeugstruktur eines Fahrzeugs bekannt, wobei die Rückenlehne aus einer annähernd aufrechten Normalstellung um eine Lehnenachse in eine in Fahrtrichtung geneigte Klappstellung umklappbar ist.

Das Verriegelungssystem umfasst dabei eine in einem Gehäuse angeordnete Verriegelungsvorrichtung, welche eine zwischen einer Verriegelungsstellung und einer Entriegelungsstellung um eine Klinkenachse schwenkbare Klinke aufweist, die von einem um eine zur Lehnenachse parallele Griffachse zwischen einer Verriegelungsposition und einer Entriegelungsposition manuell schwenkbaren Entriegelungselement schwenkbar antreibbar ist, wobei bei in Normalstellung befindlicher Rückenlehne ein an der Fahrzeugstruktur angeordnetes Gegenelement durch die in der Verriegelungsstellung befindliche Klinke an der Verriegelungsvorrichtung verriegelt ist

Aus der DE 10 2009 056 155 A1 ist ebenfalls ein gattungsgemäßes Entriegelungssystem für einen Fahrzeugsitz mit einer an der Rückenlehne angeordneten Verriegelungsvorrichtung bekannt, mittels welcher eine schwenkbare Klinke, welche ein Gegenelement an der Fahrzeugstruktur umgreift betätigbar ist.

Aus der US 2009 0 008 981 A1 ist ein gattungsgemässes Entriegelungssystem für einen Fahrzeugsitz bekannt, bei welchem eine Klinke mittels eines manuell schwenkbaren Entriegelungselements sowie mittels einer an der Fahrzeugstruktur angeordneten Betätigungseinrichtung außer Eingriff mit einem Gegenelement mit einem Gegenelement an der Fahrzeugstruktur bringbar ist.

Wird die vorher umgeklappte Rückenlehne aus ihrer Klappstellung in ihre Normalstellung geklappt, so kann es zu einer Kollision von Bauteilen der an der Rückenlehne befestigten Verriegelungsvorrichtung mit Bauteilen der an der Fahrzeugstruktur angebrachten Betätigungseinrichtung kommen.

### Aufgabe

Aufgabe der Erfindung ist es, ein Verriegelungssystem für einen Fahrzeugsitz, insbesondere einen Kraftfahrzeugsitz, zur Verriegelung an einer Fahrzeugstruktur eines Fahrzeugs zu verbessern, und dabei insbesondere bei einfachem und nur wenige Bauteile aufweisendem Aufbau eine zu Beschädigungen führende Kollision von Bauteilen der Verriegelungsvorrichtung mit Bauteilen der Betätigungseinrichtung zu vermeiden.

### Lösung

Diese Aufgabe wird erfindungsgemäß dadurch gelöst, dass bei einem Verriegelungssystem für einen Fahrzeugsitz, insbesondere für einen Kraftfahrzeugsitz, der eingangs genannten Art, die Betätigungseinrichtung einen zwischen einer Verriegelungslage und einer Entriegelungslage bewegbaren Ansteuerhebel aufweist, wobei bei in Normalstellung befindlicher Rückenlehne und in Verriegelungslage befindlichem Ansteuerhebel der Ansteuerhebel mit dem Entriegelungselement in Wirkverbindung steht, und wobei durch Bewegen des Ansteuerhebels aus seiner Verriegelungslage in seine Entriegelungslage das Entriegelungselement in seine Entriegelungsposition bewegbar antreibbar ist, und dass bei in Entriegelungslage befindlichem Ansteuerhebel und aus der Klappstellung in die Normalstellung bewegter Rückenlehne der Ansteuerhebel außer Wirkverbindung von dem Entriegelungselement ist.

Der Ansteuerhebel kann um eine zur Griffachse parallele Ansteuerachse schwenkbar oder auch quer zu seiner Längserstreckung linear zwischen der Verriegelungslage und der Entriegelungslage bewegbar sein.

Durch die Erstreckung des Ansteuerhebels in Fahrtrichtung können Betätigungseinrichtung und die mit ihr zusammenwirkenden Teile der Verriegelungsvorrichtung in alle Richtungen verhältnismäßig grob toleriert sein, ohne dass es zu einer bauteilebeschädigenden Kollision dieser Teile kommen kann, wenn die Rückenlehne aus ihrer Klappstellung in ihre Normalstellung zurückgeklappt wird, selbst wenn sich dabei der Ansteuerhebel in seiner Entriegelungslage befindet.

Da die Betätigungseinrichtung an der Fahrzeugstruktur und die Verriegelungsvorrichtung an der Rückenlehne angeordnet und nur wirkverbindbar aber nicht fest miteinander verbunden sind, sind die Betätigungseinrichtung und die Verriegelungsvorrichtung bei Klappstellung der Rückenlehne vollständig voneinander getrennt. Somit brauchen keine Teile der Betätigungseinrichtung flexibel ausgebildet und bei einem Umklappen der Rückenlehne mit der Verriegelungsvorrichtung mitgeführt zu werden.

An der Rückseite der Rückenlehne hervorstehende Teile werden dadurch vermieden, dass das Gehäuse eine Öffnung aufweist, durch die bei Normalstellung der Rückenlehne das Gegenelement in das Gehäuse ragt. Vorteilhaft ragt der Ansteuerhebel bei Normalstellung der Rückenlehne durch die selbe Öffnung in das Gehäuse.

Damit bildet die Rückseite der in Klappstellung befindlichen Rückenlehne eine völlig ebene Ladefläche ohne hervorstehende Teile.

In einfacher Ausbildung kann der Ansteuerhebel durch die Seele eines Bowdenzugs aus der Verriegelungslage in die Entriegelungslage bewegbar antreibbar sein, wobei der Bowdenzug in einen Kofferraum des Fahrzeugs führen kann und seine Seele an ihrem dem Ansteuerhebel entgegengesetzten Ende von einer Zugeinrichtung zugbeaufschlagbar ist.

Damit ist eine Entriegelung der Rückenlehne sowohl von dem Fahrgastraum aus als auch von dem hinter dem Fahrgastraum liegenden Raum wie z.B. dem Kofferraum aus möglich.

Zur Übertragung der Bewegung des Ansteuerhebels in seine Entriegelungslage auf das Entriegelungselement kann ein Druckelement an seinem einen Ende um eine zur Klinkenachse parallele Druckelementachse frei schwenkbar gelagert und an seinem der Druckelementachse entfernten Ende von dem Ansteuerhebel in Richtung auf die Druckelementachse beaufschlagbar sein.

Damit wird eine Beaufschlagung des Druckelements in Richtung auf die Druckelementachse auf das Entriegelungselement übertragen, während eine nicht in Richtung auf die Druckelementachse gerichtete Beaufschlagung des Druckelements zu einem Schwenken des Druckelements um die Druckelementachse führt und nicht auf das Entriegelungselement wirkt.

Vorzugsweise ist dabei das Druckelement eine Druckarm.

Dabei kann das Druckelement durch die Schwenkbewegung der Rückenlehne aus der Klappstellung in die Normalstellung von dem in seiner Entriegelungslage befindlichen Ansteuerhebel entgegen einer Federkraft in eine Inaktivstellung schwenkbar beaufschlagbar sein, in der das Entriegelungselement von dem Ansteuerhebel unbeaufschlagbar ist, so dass keine zu Beschädigungen führende Kollision zwischen den Bauteilen von Betätigungseinrichtung und Verriegelungsvorrichtung eintreten kann.

Ohne eine weitere Verstellung insbesondere ohne ein Klappen der Rückenlehne kann damit immer noch der Ansteuerhebel ohne Kollision mit anderen Teilen in seine Verriegelungslage zurückverstellt werden, wobei auch das Druckelement in seine Aktivstellung zurückschwenkt.

Vorzugsweise ist dabei das Druckelement von dem stirnseitigen freien Ende des Ansteuerhebels in die Inaktivstellung schwenkbar beaufschlagbar.

Um das Druckelement nach einer solchen Auslenkung wieder in seine normale Aktivstellung zu bringen, in der eine Bewegungsübertragung von dem Ansteuerhebel auf das Entriegelungselement möglich ist, kann an dem Entriegelungselement ein Federarm mit seinem einen Ende angeordnet sein, der mit seinem anderen Endbereich an dem Druckelement in Anlage und durch Schwenken des Druckelements in dessen Inaktivstellung seine Federspannung erhöhend auslenkbar ist.

Bauraum und eine besondere Haltungseinrichtung sparend kann der Ansteuerhebel an dem Gegenelement angeordnet sein.

Damit kann auch das Gehäuse nur eine einzige gemeinsame Öffnung zum Einführen von Ansteuerhebel und Gegenelement in die Verriegelungsvorrichtung aufweisen.

Vorzugsweise ist das Gegenelement ein Bügel, der von der Klinke in deren Verriegelungsstellung hintergriffen wird.

Ist ein in einer Führung zwischen einer in der Führung versenkten Nichtanzeigestellung und einer teilweise aus der Führung nach außen herausragenden Anzeigestellung geführtes Anzeigeglied von dem Entriegelungselement verschiebbar antreibbar ist, wobei das Anzeigeglied in der Verriegelungsstellung des Entriegelungselements sich in der Nichtanzeigestellung und in der Entriegelungsstellung des Entriegelungselements sich in der Anzeigestellung befindet, so wird durch das in der Anzeigestellung befindliche Anzeigeglied optisch angezeigt, wenn sich das Entriegelungselement in der Entriegelungsposition befindet.

Die Aufgabe wird auch durch einen Fahrzeugsitz mit den Merkmalen des Anspruchs 11 gelöst.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:
- Figur 1: eine perspektivische Ansicht eines Verriegelungssystems mit einer Lehnenstruktur mit Verriegelungsvorrichtung und einer Fahrzeugstruktur mit Betätigungseinrichtung und einem Bügel in der Normalstellung,
- Figur 2: das Verriegelungssystem nach Figur 1 mit in Fahrtrichtung aus der Normalstellung geklappter Lehnenstruktur,

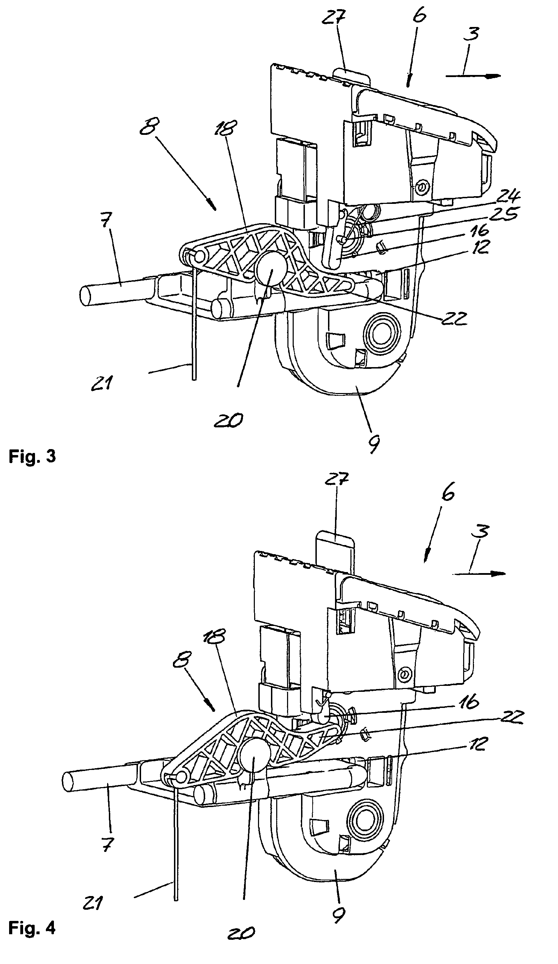

- Figur 3: eine perspektivische Ansicht des Verriegelungssystems nach Figur 1 in Normallage der Verriegelungsvorrichtung ohne Lehnenstruktur und Fahrzeugstruktur mit einer Handhabe in Verriegelungsposition und einem Ansteuerhebel in Verriegelungslage,
- Figur 4: eine perspektivische Ansicht des Verriegelungssystems nach Figur 3 in Normallage der Verriegelungsvorrichtung mit der Handhabe in Entriegelungsposition und dem Ansteuerhebel in Entriegelungslage,
- Figur 5: eine perspektivische Ansicht des Verriegelungssystems nach Figur 3 mit aus abgeklappter Lage in Normallage geschwenkter Verriegelungsvorrichtung und der Handhabe in Verriegelungsposition sowie dem Ansteuerhebel in Entriegelungslage,
- Figur 6: eine weitere perspektivische Ansicht des Verriegelungssystems entsprechend Figur 3,

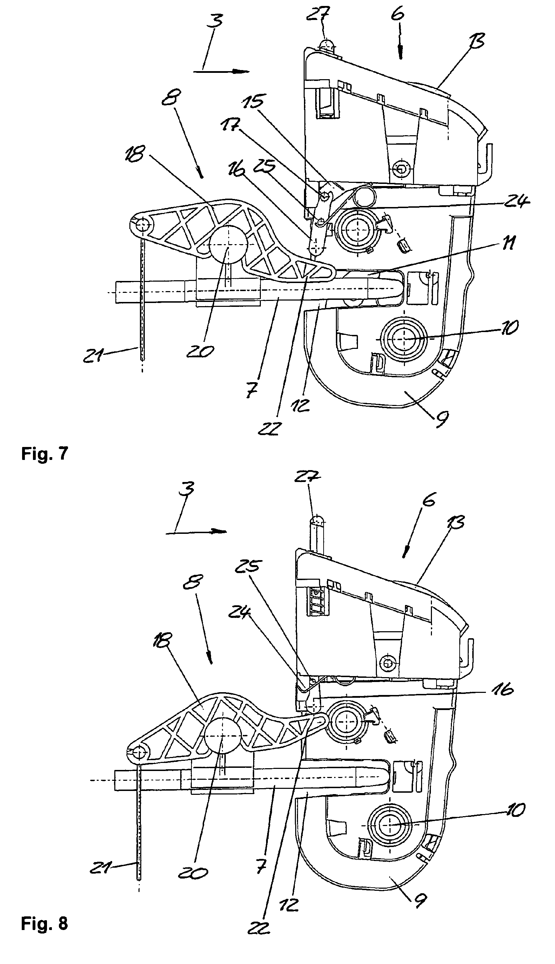

- Figur 7: eine Seitenansicht des Verriegelungssystems in einer Lage entsprechend Figur 3,
- Figur 8: eine Seitenansicht des Verriegelungssystems in einer Lage entsprechend Figur 4,
- Figur 9: eine Seitenansicht des Verriegelungssystems nach Figur 3 in abgeklappter Lage der Verriegelungsvorrichtung,
- Figur 10: eine Seitenansicht des Verriegelungssystems in einer Lage Entsprechend Figur 5,

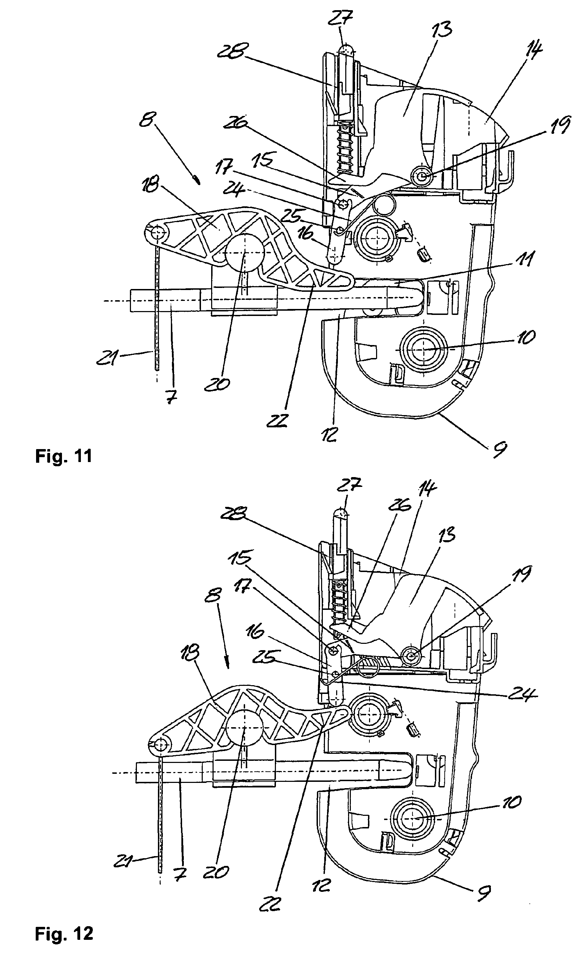

- Figur 11: eine Seitenansicht des Verriegelungssystems mit teilweise geöffnetem Gehäuse in einer Lage entsprechend Figur 7,
- Figur 12: eine Seitenansicht des Verriegelungssystems mit teilweise geöffnetem Gehäuse in einer Lage entsprechend Figur 8 und
- Figur 13: eine Seitenansicht des Verriegelungssystems mit teilweise geöffnetem Gehäuse in einer Lage entsprechend Figur 10.

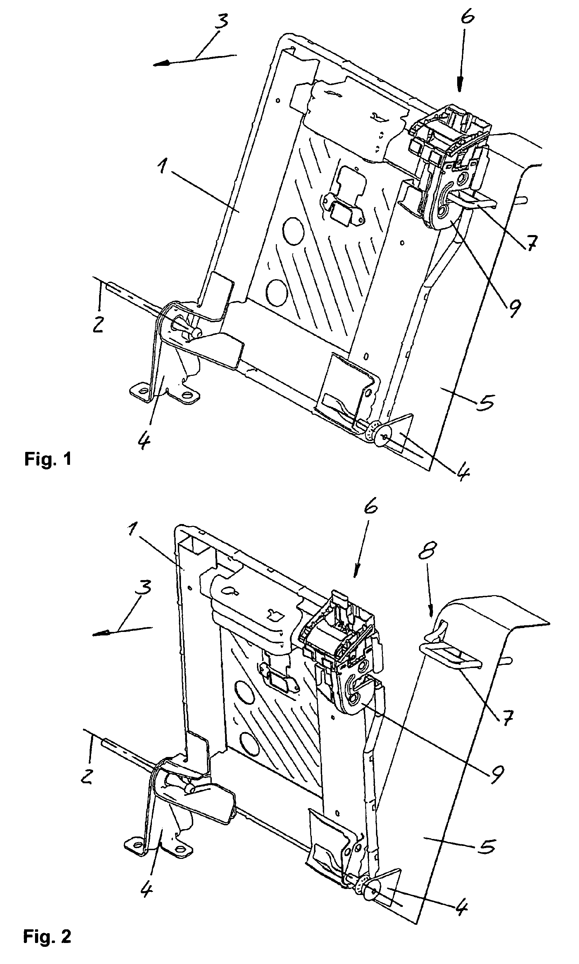

In den Figuren 1 und 2 ist in perspektivischer Ansicht eine Lehnenstruktur 1 eines Fahrzeugsitzes dargestellt, die aus ihrer aufrechten Normalstellung (Figur 1) um eine Lehnenachse 2 an ihrem unteren Endbereich in Fahrtrichtung 3 nach vorne, insbesondere in eine waagrechte Lage klappbar ist.

In der aufrechten Normalstellung stützt sich die Lehnenstruktur 1 an einer Fahrzeugstruktur 5 ab und ist mit einer an der Lehnenstruktur 1 fest angeordneten Verriegelungsvorrichtung 6 mit einem fest an der Fahrzeugstruktur 5 verbunden u-förmigen Bügel 7 verriegelt.

Die Lehnenachse 2 erstreckt sich dabei waagrecht quer zur Fahrtrichtung 3. Eine Halterung 4 der Lehnenachse 2 ist fest mit der Fahrzeugstruktur 5 verbindbar.

Durch eine an dem Bügel 7 fest angeordnete Betätigungseinrichtung 8 kann diese Verriegelung entriegelt werden.

Die Verriegelungsvorrichtung 6 ist in einem Gehäuse 9 angeordnet und weist eine um eine zur Lehnenachse 2 parallele Klinkenachse 10 schwenkbare Klinke 11 auf, durch die der in der Normalstellung der Lehnenstruktur 1 in eine schlitzartige Aufnahme 12 des Gehäuses 9 eingeführte Bügel 7 umgreifbar und verriegelbar ist.

Die Klinke 11 ist direkt oder indirekt von einer ein Entriegelungselement bildenden Handhabe 13 aus ihrer Verriegelungsstellung in ihre Entriegelungsstellung schwenkbar antreibbar. Die Handhabe 13 ist über eine Betätigungsöffnung 14 an der nach oben gerichteten Seite des Gehäuses 9 zugänglich und um eine zur Lehnenachse 2 parallele Griffachse 19 manuell verschwenkbar.

An einem ersten Handhabearm 15 der Handhabe 13 ist ein Druckarm 16 mit seinem einen Ende um eine zur Klinkenachse 10 parallele Druckelementachse 17 frei schwenkbar gelagert. Der Druckarm 16 wird von einem Federarm 24, welcher mit seinem einen Ende an dem ersten Handhabearm 15 befestigt ist und mit seinem freiragenden anderen Ende an einem Zapfen 25 des Druckarms 16 anliegt, in eine senkrecht nach unten gerichteten Aktivstellung gedrückt.

Die Betätigungseinrichtung 8 weist einen sich im Wesentlichen in Fahrtrichtung 3 erstreckenden zweiarmigen Ansteuerhebel 18 auf, der um eine zur Griffachse 19 parallele Ansteuerachse 20 schwenkbar an dem Bügel 7 angeordnet ist. Der Ansteuerhebel ist dabei toleranzreduzierend ausgerichtet, vorzugsweise aufgeklipst.

Die Seele 21 eines zu einem Kofferraum des Fahrzeugs führenden Bowdenzugs erstreckt sich etwa senkrecht von dem in Fahrtrichtung 3 hinteren Ende des Ansteuerhebels 18 nach unten. Durch Zug der Seele 21 ist der Ansteuerhebel 18 aus seiner Verriegelungslage in seine Entriegelungslage schwenkbar.

In der Verriegelungslage weist der Ansteuerhebel 18 mit seinem in Fahrtrichtung 3 vorderen Ende eine leichte Neigung nach unten und in der Entriegelungslage mit seinem in Fahrtrichtung 3 vorderen Ende eine leichte Neigung nach oben auf.

Befindet sich die Lehnenstruktur 1 in einer von der Fahrzeugstruktur 5 abgeklappten Stellung, welche als Klappstellung bezeichnet wird, und der Ansteuerhebel 18 in seiner Verriegelungslage und wird die Lehnenstruktur 1 in ihre Normalstellung geklappt, so wird der Bügel 7 und der in Fahrtrichtung 3 vordere Endbereich 22 des Ansteuerhebels 18 durch eine Öffnung 23 im Gehäuse 9 relativ in die Aufnahme 12 hineinbewegt.

Der Bügel 7 lenkt dabei die Klinke 11 aus, die dann federnd wieder den Bügel 7 umgreift und verriegelt. Der vordere Endbereich 22 gelangt dabei unter das nach unten gerichtete freie Ende des Druckarms 16.

Soll nun die Lehnenstruktur 1 wieder entriegelt werden, kann dies durch Verschwenken der Handhabe 13 aus der Verriegelungsposition in die Entriegelungsposition erfolgen, wobei die Handhabe 13 die Klinke 11 von der Verriegelungsstellung in die Entriegelungsstellung bewegt und den Bügel 7 frei gibt, so dass die Lehnenstruktur 1 umgeklappt werden kann.

Es ist aber auch möglich, dass durch Ziehen der Seele 21 des Bowdenzugs der Ansteuerhebel 18 aus seiner Verriegelungslage in seine Entriegelungslage geschwenkt wird, wobei der vordere Endbereich 22 des Ansteuerhebels 18 gegen die nach unten gerichtete Stirnseite des Druckarms 16 zur Anlage kommt und mit einer in Richtung auf die Druckelementachse 17 gerichteten Kraft den Druckarm 16 in seine Längserstreckungsrichtung anhebt und dabei den ersten Handhebelarm 15 und mit ihm die Handhabe 13 aus ihrer Verriegelungsposition in ihre Entriegelungsposition schwenkt, wodurch die Klinke 11 von ihrer Verriegelungsstellung in ihre Entriegelungsstellung bewegt wird.

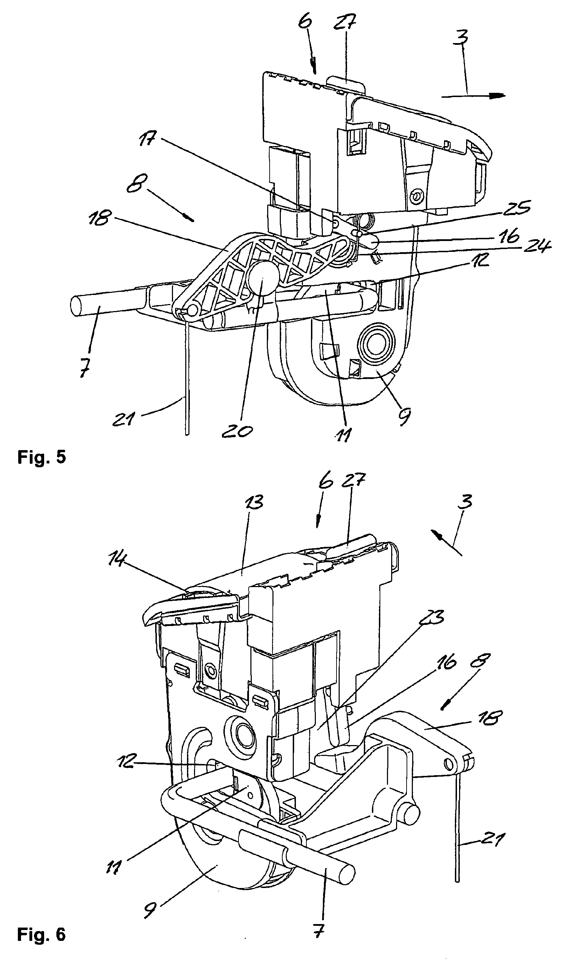

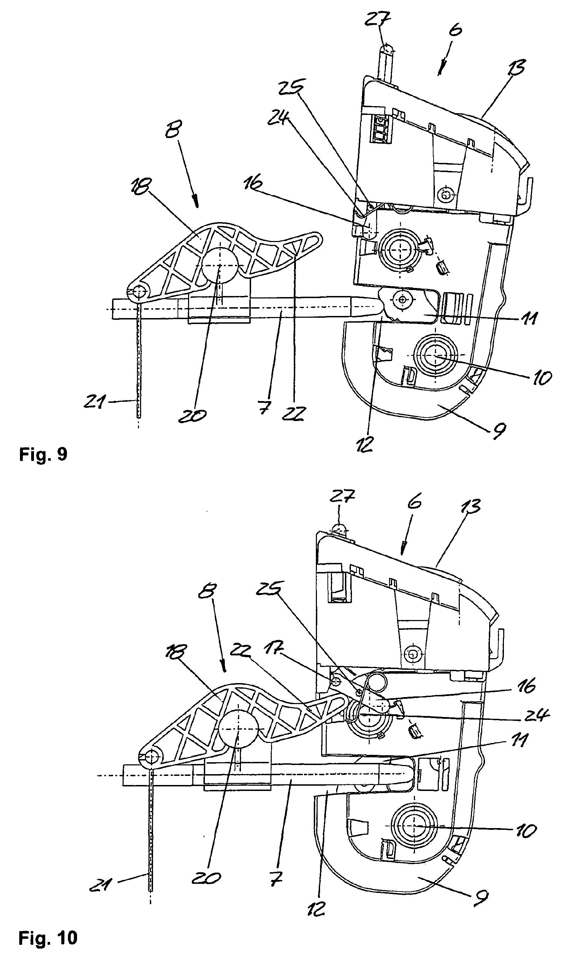

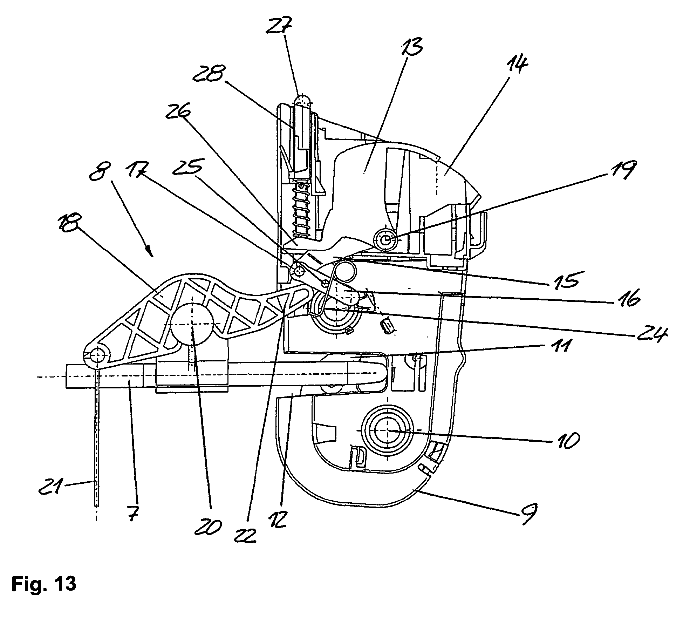

Befindet sich die Lehnenstruktur 1 in ihrer Klappstellung und soll wieder in ihre aufrechte Normalstellung geklappt werden und befindet sich der Ansteuerhebel 18 in seiner Entriegelungslage, so wird der Druckarm 16 von der Stirnseite des vorderen Endbereichs 22 des Ansteuerhebels 18 quer zu seiner Längserstreckung beaufschlagt und um die Druckelementachse 17 entgegen der Kraft eines Federarms 24 aus seiner vertikalen Lage in eine ausgelenkte Inaktivstellung geschwenkt (Figuren 5, 10, 13).

Es kommt aber zu keiner zerstörerischen Kollision von Teilen der Verriegelungsvorrichtung 6 und der Betätigungseinrichtung 8.

Der Bügel 7 wird von der Klinke 11 wieder umgriffen und der Druckarm 16 wird bei einer späteren Bewegung des Ansteuerhebels 18 in die Verriegelungslage durch den Federarm 24 wieder in seine Aktivstellung geschwenkt.

Die Handhabe 13 weist weiterhin einen radial abstehenden zweiten Handhebelarm 26 auf, durch den ein Anzeigeglied 27 aus einer in einer Führung 28 versenkten Nichtanzeigestellung in eine teilweise aus der Führung und dem Gehäuse herausragenden Anzeigestellung verschiebbar antreibbar ist.

Das Anzeigeglied 27 befindet sich bei in Verriegelungsposition befindlicher Handhabe 13 in der Nichtanzeigestellung und bei in Entriegelungsposition befindlicher Handhabe 13 in der Anzeigestellung.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Lehnenstruktur
- 2: Lehnenachse
- 3: Fahrtrichtung
- 4: Halterung
- 5: Fahrzeugstruktur
- 6: Verriegelungsvorrichtung
- 7: Bügel
- 8: Betätigungseinrichtung
- 9: Gehäuse
- 10: Klinkenachse
- 11: Klinke
- 12: Aufnahme
- 13: Handhabe
- 14: Betätigungsöffnung
- 15: erster Handhabearm
- 16: Druckarm
- 17: Druckelementachse
- 18: Ansteuerhebel
- 19: Griffachse
- 20: Ansteuerachse
- 21: Seele
- 22: vorderer Endbereich
- 23: Öffnung
- 24: Federarm
- 25: Zapfen
- 26: zweiter Handhebelarm
- 27: Anzeigeglied
- 28: Führung

## Patentansprüche

1. Verriegelungssystem für einen Fahrzeugsitz, zur Verriegelung an einer Fahrzeugstruktur eines Fahrzeugs,
mit einer Rückenlehne, die aus einer annähernd aufrechten Normalstellung um eine Lehnenachse (2) in eine in Fahrtrichtung (3) geneigte Klappstellung umklappbar ist,
mit einer an der Rückenlehne angeordneten Verriegelungsvorrichtung (6), die in einem Gehäuse (9) angeordnet ist und eine zwischen einer Verriegelungsstellung und einer Entriegelungsstellung um eine Klinkenachse (10) schwenkbare Klinke (11) aufweist, die von einem um eine zur Lehnenachse (2) parallele Griffachse (19) zwischen einer Verriegelungsposition und einer Entriegelungsposition manuell schwenkbaren Entriegelungselement
sowie von einer an der Fahrzeugstruktur (5) angeordneten Betätigungseinrichtung (8) schwenkbar antreibbar ist,
wobei bei in Normalstellung befindlicher Rückenlehne ein an der Fahrzeugstruktur (5) angeordnetes Gegenelement durch die in der Verriegelungsstellung befindliche Klinke (11) an der Verriegelungsvorrichtung (6) verriegelt ist, **dadurch gekennzeichnet, dass**
die Betätigungseinrichtung (8) einen zwischen einer Verriegelungslage und einer Entriegelungslage bewegbaren Ansteuerhebel (18) aufweist,
wobei bei in Normalstellung befindlicher Rückenlehne und in Verriegelungslage befindlichem Ansteuerhebel (18) der Ansteuerhebel (18) mit dem Entriegelungselement in Wirkverbindung steht,
und wobei durch Bewegen des Ansteuerhebels (18) aus seiner Verriegelungslage in seine Entriegelungslage das Entriegelungselement in seine Entriegelungsposition bewegbar antreibbar ist,
und dass bei in Entriegelungslage befindlichem Ansteuerhebel (18) und bei aus der Klappstellung in die Normalstellung bewegter Rückenlehne der Ansteuerhebel (18) außer Wirkverbindung von dem Entriegelungselement ist.

2. Verriegelungssystem nach Anspruch 1, **dadurch gekennzeichnet, dass** das Gehäuse (9) eine Öffnung (23) aufweist, durch die bei Normalstellung der Rückenlehne das Gegenelement in das Gehäuse (9) ragt.

3. Verriegelungssystem nach Anspruch 2, **dadurch gekennzeichnet, dass** bei Normalstellung der Rückenlehne der Ansteuerhebel (18) durch die Öffnung (23) in das Gehäuse (9) ragt.

4. Verriegelungssystem nach einem der vorhergehenden Ansprüche, **dadurch gekennzeichnet, dass** der Ansteuerhebel (18) durch die Seele (21) eines Bowdenzugs aus der Verriegelungslage in die Entriegelungslage bewegbar antreibbar ist.

5. Verriegelungssystem nach Anspruch 4, **dadurch gekennzeichnet, dass** die Seele (21) des Bowdenzugs an ihrem dem Ansteuerhebel (18) entgegengesetzten Ende von einer Zugeinrichtung zugbeaufschlagbar ist.

6. Verriegelungssystem nach einem der vorhergehenden Ansprüche, **dadurch gekennzeichnet, dass** zur Übertragung der Bewegung des Ansteuerhebels (18) in seine Entriegelungslage auf das Entriegelungselement ein Druckelement an seinem einen Ende um eine zur Klinkenachse (10) parallele Druckelementachse (17) frei schwenkbar gelagert und an seinem der Druckelementachse (17) entfernten Ende von dem Ansteuerhebel (18) in Richtung auf die Druckelementachse (17) beaufschlagbar ist.

7. Verriegelungssystem nach Anspruch 6, **dadurch gekennzeichnet, dass** das Druckelement durch die Schwenkbewegung der Rückenlehne aus der Klappstellung in die Normalstellung von dem in seiner Entriegelungslage befindlichen Ansteuerhebel (18) entgegen einer Federkraft in eine Inaktivstellung schwenkbar beaufschlagbar ist, in der das Entriegelungselement von dem Ansteuerhebel (18) unbeaufschlagbar ist.

8. Verriegelungssystem nach Anspruch 7, **dadurch gekennzeichnet, dass** an dem Entriegelungselement ein Federarm (24) mit seinem einen Ende angeordnet ist, der mit seinem anderen Endbereich an dem Druckelement in Anlage und durch Schwenken des Druckelements in dessen Inaktivstellung seine Federspannung erhöhend auslenkbar ist.

9. Verriegelungssystem nach einem der vorhergehenden Ansprüche, **dadurch gekennzeichnet, dass** der Ansteuerhebel (18) an dem Gegenelement angeordnet ist.

10. Verriegelungssystem nach einem der vorhergehenden Ansprüche, **dadurch gekennzeichnet, dass** ein in einer Führung (28) zwischen einer in der Führung (28) versenkten Nichtanzeigestellung und einer teilweise aus der Führung (28) nach außen herausragenden Anzeigestellung geführtes Anzeigeglied (27) von dem Entriegelungselement verschiebbar antreibbar ist, wobei das Anzeigeglied (27) in der Verriegelungsstellung des Entriegelungselements sich in der Nichtanzeigestellung und in der Entriegelungsstellung des Entriegelungselements sich in der Anzeigestellung befindet.

11. Fahrzeugsitz, umfassend mindestens ein Verriegelungssystem nach einem der vorhergehenden Ansprüche.

## Claims

1. Locking system for a vehicle seat, for locking to a vehicle structure of a vehicle,
comprising a backrest which is able to be folded from an approximately upright normal position about a backrest axis (2) into a folded position inclined in the direction of travel (3),
comprising a locking device (6) arranged on the backrest which is arranged in a housing (9) and comprises a pawl (11) which is able to be pivoted between a locked position and an unlocked position about a pawl axis (10), said pawl being able to be pivotably driven by an unlocking element which is manually pivotable about a grip axis (19) parallel to the backrest axis (2), between a locked position and an unlocked position,
as well as by an actuation device (8) arranged on the vehicle structure (5),
wherein, when the backrest is in the normal position, a counter element arranged on the vehicle structure (5) is locked to the locking device (6) by the pawl (11) in the locked position, **characterized in that** the actuation device (8) has a control lever (18) which is able to be moved between a locked position and an unlocked position,
wherein the control lever (18) is operatively connected to the unlocking element when the backrest is in the normal position and the control lever (18) is in the locked position,
and wherein by moving the control lever (18) from its locked position into its unlocked position, the unlocking element is able to be movably driven into its unlocked position,
and **in that** the control lever (18) is not operatively connected to the unlocking element when the control lever (18) is in the unlocked position and when the backrest has been moved from the folded position into the normal position.

2. Locking system according to Claim 1, **characterized in that** the housing (9) has an opening (23) through which, in the normal position of the backrest, the counter element protrudes into the housing (9).

3. Locking system according to Claim 2, **characterized in that**, when the backrest is in the normal position, the control lever (18) protrudes through the opening (23) into the housing (9).

4. Locking system according to one of the preceding claims, **characterized in that** the control lever (18) is able to be driven in a movable manner by the core (21) of a Bowden cable from the locked position into the unlocked position.

5. Locking system according to Claim 4, **characterized in that** the core (21) of the Bowden cable is able to be subjected to a pulling force by a pulling device at its end opposing the control lever (18).

6. Locking system according to one of the preceding claims, **characterized in that** for transmitting the movement of the control lever (18) into its unlocked position onto the unlocking element, a pressure element is freely pivotably mounted at its one end about a pressure element axis (17) parallel to the pawl axis (10) and, at its end remote from the pressure element axis (17), is able to be acted upon by the control lever (18) in the direction of the pressure element axis (17).

7. Locking system according to Claim 6, **characterized in that** the pressure element is able to be acted upon in a pivotable manner by the pivoting movement of the backrest from the folded position into the normal position, by the control lever (18) in its unlocked position, counter to a spring force into an inactive position in which the unlocking element is not able to be acted upon by the control lever (18).

8. Locking system according to Claim 7, **characterized in that** a spring arm (24) is arranged with its one end on the unlocking element, said spring arm with its other end region bearing against the pressure element and by pivoting the pressure element being able to be deflected into the inactive position thereof, increasing the spring tension thereof.

9. Locking system according to one of the preceding claims, **characterized in that** the control lever (18) is arranged on the counter element.

10. Locking system according to one of the preceding claims, **characterized in that** an indication member (27) guided in a guide (28) between a non-indication position lowered in the guide (28) and an indication position protruding partially outwards from the guide (28), is able to be driven in a displaceable manner by the unlocking element, wherein the indication member (27), in the locked position of the unlocking element, is in the non-indication position and, in the unlocked position of the unlocking element, is in the indication position.

11. Vehicle seat comprising at least one locking system according to one of the preceding claims.

## Revendications

1. Système de verrouillage pour un siège de véhicule, en vue du verrouillage à une structure de véhicule d'un véhicule,
avec un dossier, qui est rabattable d'une position normale approximativement verticale autour d'un axe de dossier (2) à une position rabattue inclinée dans la direction de marche (3),
avec un dispositif de verrouillage (6) disposé sur le dossier, qui est disposé dans un boîtier (9) et qui présente un cliquet (11) pouvant pivoter autour d'un axe de cliquet (10) entre une position de verrouillage et une position de déverrouillage, et qui peut être entraîné en pivotement par un élément de déverrouillage pouvant pivoter manuellement autour d'un axe de saisie (19) parallèle à l'axe de dossier (2) entre une position de verrouillage et une position de déverrouillage ainsi que par un dispositif d'actionnement (8) disposé sur la structure de véhicule (5),
dans lequel, lorsque le dossier se trouve en position normale, un contre-élément disposé sur la structure de véhicule (5) est verrouillé par le cliquet (11) se trouvant dans la position de verrouillage sur le dispositif de verrouillage (6),
**caractérisé en ce que**
le dispositif d'actionnement (8) présente un levier de commande (18) déplaçable entre une position de verrouillage et une position de déverrouillage,
dans lequel, lorsque le dossier se trouve en position normale et que le levier de commande (18) se trouve en position de verrouillage, le levier de commande (18) est en liaison active avec l'élément de déverrouillage, et dans lequel, par déplacement du levier de commande (18) de sa position de verrouillage à sa position de déverrouillage, l'élément de déverrouillage peut être entraîné en mouvement dans sa position de déverrouillage,
et **en ce que**, lorsque le levier de commande (18) se trouve en position de déverrouillage et que le dossier est déplacé de la position rabattue à la position normale, le levier de commande (18) est dégagé de sa liaison active par l'élément de déverrouillage.

2. Système de verrouillage selon la revendication 1, **caractérisé en ce que** le boîtier (9) présente une ouverture (23), par laquelle le contre-élément pénètre dans le boîtier (9) lorsque le dossier se trouve en position normale.

3. Système de verrouillage selon la revendication 2, **caractérisé en ce que**, dans la position normale du dossier, le levier de commande (18) pénètre dans le boîtier (9) par l'ouverture (23).

4. Système de verrouillage selon l'une quelconque des revendications précédentes, **caractérisé en ce que** le levier de commande (18) peut être entraîné en mouvement de la position de verrouillage à la position de déverrouillage par l'âme (21) d'un câble Bowden.

5. Système de verrouillage selon la revendication 4, **caractérisé en ce que** l'âme (21) du câble Bowden peut être mise en traction par un dispositif de traction à son extrémité opposée au levier de commande (18).

6. Système de verrouillage selon l'une quelconque des revendications précédentes, **caractérisé en ce que**, pour la transmission du mouvement du levier de commande (18) dans sa position de déverrouillage à l'élément de déverrouillage, un élément de pression est monté de façon librement pivotante, à sa première extrémité, autour d'un axe d'élément de pression (17) parallèle à l'axe de cliquet (10) et peut, à son extrémité éloignée de l'axe d'élément de pression (17), être poussé par le levier de commande (18) en direction de l'axe d'élément de pression (17).

7. Système de verrouillage selon la revendication 6, **caractérisé en ce que** l'élément de pression peut être poussé de façon pivotante dans une position inactive, dans laquelle l'élément de déverrouillage ne peut pas être poussé par le levier de commande (18), contre une force de ressort par le levier de commande (18) se trouvant dans sa position de déverrouillage, par le mouvement pivotant du dossier de la position rabattue à la position normale.

8. Système de verrouillage selon la revendication 7, **caractérisé en ce qu'**un bras de ressort (24) est disposé avec sa première extrémité sur l'élément de déverrouillage, et peut être dévié avec son autre région d'extrémité en appui sur l'élément de pression et par pivotement de l'élément de pression dans sa position inactive en augmentant sa contrainte de ressort.

9. Système de verrouillage selon l'une quelconque des revendications précédentes, **caractérisé en ce que** le levier de commande (18) est disposé sur le contre-élément.

10. Système de verrouillage selon l'une quelconque des revendications précédentes, **caractérisé en ce qu'**un organe d'affichage (27) guidé dans un guidage (28) peut être déplacé de façon coulissante par l'élément de déverrouillage entre une position de non-affichage abaissée dans le guidage (28) et une position d'affichage sortant partiellement vers l'extérieur hors du guidage (28), dans lequel l'organe d'affichage (27) se trouve dans la position de non-affichage dans la position de verrouillage de l'élément de déverrouillage et dans la position d'affichage dans la position de déverrouillage de l'élément de déverrouillage.

11. Siège de véhicule, comprenant au moins un système de verrouillage selon l'une quelconque des revendications précédentes.
